# EUROPÄISCHE PATENTSCHRIFT

(11) **EP 0 910 146 B1**
(45) Veröffentlichungstag und Bekanntmachung des Hinweises auf die Patenterteilung: **25.05.2005**
(21) Anmeldenummer: 98117540.9
(22) Anmeldetag: 16.09.1998
(51) Int. Cl.: H02B 1/44, H02B 1/46

(54) **Gehäuse**
Box
Boîtier

(30) Priorität: 18.10.1997 DE 19746118
(43) Veröffentlichungstag der Anmeldung: 21.04.1999
(73) Patentinhaber: KRONE GmbH, 14167 Berlin (DE)
(72) Erfinder: Czogalla, Frank, Dipl.-Ing., 12205 Berlin (DE); Benedetto, Adrian, Ing., 12103 Berlin (DE)

(56) Entgegenhaltungen:
- EP-A- 0 253 756
- FR-A- 2 198 349
- US-A- 3 895 179

## Beschreibung

Die Erfindung bezieht sich auf ein Gehäuse gemäß dem Oberbegriff des Patentanspruches 1.

Ein Gehäuse dieser Art ist aus der EP 0.253.756 B1 vorbekannt. Nach dem Lösen einer Verriegelung kann die Abdeckhaube um einen gewissen Betrag schräg aufwärts bewegt werden, bis die abgeflachten Lagerzapfen in die Lagerschlitze eintreten, so daß sich die Abdeckhaube um 90° nach oben schwenken läßt, bis die Hinterkante der oberen Wand der Abdeckhaube an der Oberseite des Gehäusegrundkörpers anschlägt. Ein weiteres Verschwenken der Abdeckhaube ist nicht möglich, so daß die Montagearbeiten an den im Inneren des Gehäuses befindlichen Anschluß- oder Bedienfeldern erschwert sind.

Der Erfindung liegt die Aufgabe zugrunde, ein Gehäuse der gattungsgemäßen Art derart auszubilden, daß ein freies Öffnen der Abdeckhaube bis zu einem Winkel von 135° gegenüber der Vertikalen möglich ist, ohne daß die Abdeckhaube die Gebäudewand bzw. den Mast berührt, an die bzw. den das Gehäuse angeschraubt ist.

Die Lösung dieser Aufgabe ergibt sich aus den kennzeichnenden Merkmalen des Patentanspruches 1. Das Gehäuse ist derart aufgebaut, daß die Abdeckhaube um einen Lagerschlitz geschwenkt wird, der sich im Gehäusegrundkörper in der Nähe der Gehäuseoberseite befindet. Dabei haben die oberen Wände von Abdeckhaube und Gehäusegrundkörper ein Profil, das im eingeschwenkten Zustand ineinandergreift. Beim Verschwenken kommt die Hinterkante der freien oberen Wand der Abdeckhaube von der oberen Wand des Gehäusegrundkörpers frei. Beim weiteren Verschwenken ist ein freies Öffnen der Abdeckhaube bis zu einem Winkel von 135° gegenüber der Vertikalen möglich, bis die Hinterkante der Abdeckhaube an die obere Wand des Gehäusegrundkörpers anstößt und ohne daß die Abdeckhaube die Gebäudewand bzw. den Mast berührt,an die bzw. den das Gehäuse angeschraubt ist. Die Ausnehmung ist inbesondere U-förmig ausgebildet.

In weiterer Ausbildung der Erfindung gemäß den Merkmalen der Unteransprüche wird die Abdeckhaube zum Öffnen nach dem Lösen von Verriegelungen um einen geringen Betrag angehoben, wobei die Lagerzapfen in den Lagerschlitzen unter etwa 45° schräg aufwärts gleiten, bis die den Gehäusegrundkörper teilweise haubenartig umschließende Abdeckhaube frei gegenüber dem Gehäusegrundkörper schwenkbar wird.

In bevorzugter Ausbildung der Erfindung sind die Lagerzapfen etwa in der Mitte der Seitenwände der Abdeckhaube und die Lagerschlitze im vorderen Bereich der Seitenwände des Gehäusegrundkörpers jeweils nahe den Oberseiten angeordnet.

Weitere vorteilhafte Ausgestaltungen der Erfindung ergeben sich aus den weiteren Unteransprüchen.

Die Erfindung ist nachfolgend anhand einer Prinzipdarstellung und anhand einer in den Zeichnungen dargestellten Ausführungsform näher erläutert. Es zeigen:
- Fig. 1: eine schematische Seitenansicht des geschlossenen Gehäuses,
- Fig. 2: eine Draufsicht auf das Gehäuse nach Fig.1,
- Fig. 3: eine Seitenansicht des Gehäuses nach Fig. 1 in angehobener Stellung der Abdeckhaube,
- Fig. 4: eine Seitenansicht des Gehäuses nach Fig.1 in 90°-Stellung der Abdeckhaube,
- Fig. 5: eine Seitenansicht des Gehäuses nach Fig. 1 in 135°-Stellung der Abdeckhaube,
- Fig. 6: eine perspektivische Darstellung der Ausführungsform des Gehäuses mit um 135° geöffneter Abdeckhaube,
- Fig. 7: eine vergrößerte Darstellung des Details X in Fig. 6,
- Fig. 8: eine vergrößerte Darstellung des Details Z in Fig. 6,
- Fig. 9: eine Draufsicht auf das Gehäuse ohne Abdeckhaube,
- Fig.10: den Schnitt A-A gemäß der Fig. 9 und
- Fig.11: das geschlossene Gehäuse nach den Fig. 6-10.

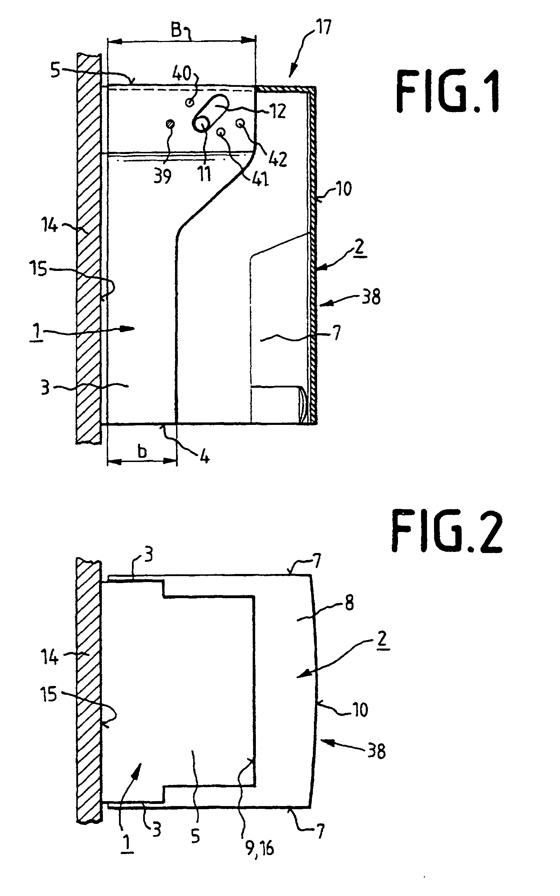

Das Gehäuse besteht entsprechend den schematischen Darstellungen in den Fig. 1 bis 5 aus einem kastenförmigen Gehäusegrundkörper 1 und einer diesen teilweise haubenartig umschließenden Abdeckhaube 2. Die Seitenwände 3 und die untere Wand 4 des Gehäusegrundkörpers 1 sind mit der Breite b wesentlich schmaler als die obere Wand 5 mit der Breite B ausgebildet, wobei die Seitenwände 3 schräg von der oberen Wand 5 ausgehen. Eine Rückwand 15 des Gehäusegrundkörpers 1 bildet die Montagewand zur Befestigung an einer Gebäudewand 14 oder einem Mast.

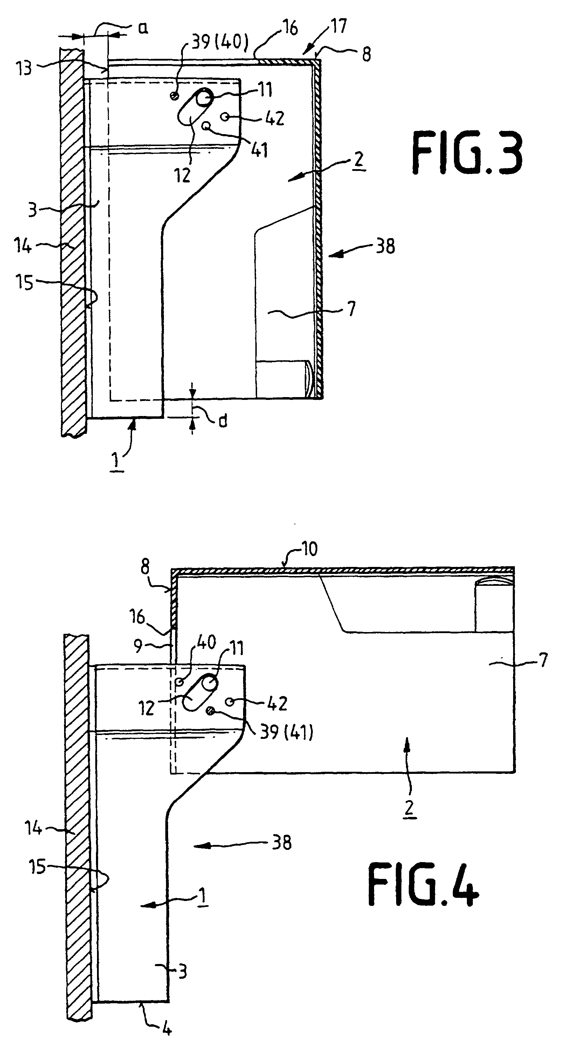

Die Seitenwände 7 der den Gehäusegrundkörper 1 teilweise haubenartig umschließenden Abdeckhaube 2 überdecken die Seitenwände 3 des Gehäusegrundkörpers 1 in der Schließstellung, wie es in der Prinzipdarstellung nach Fig. 1 ersichtlich ist. Die Vorderwand 10 der Abdeckhaube 2 schließt das Gehäuse nach vorn ab. Die obere Wand 8 der Abdeckhaube 2 weist einen U-förmigen Ausschnitt 9 mit der Innenkante 16 auf (Fig. 2) und bildet in der Schließstellung mit der oberen Wand 5 des Gehäusegrundkörpers 1 die Gehäuseoberseite 17 (Fig. 1,3).

Das derart gebildete Gehäuse ist in der Prinzipdarstellung der Fig. 1 bis 5 im wesentlichen kastenförmig, wobei der Gehäusegrundkörper 1 durch die Seitenwände 7, die Vorderwand 10 und die obere Wand 8 der Abdeckhaube 2 verschlossen ist, wobei die Seitenwände 7 der Abdeckhaube 2 die Seitenwände 3 des Gehäusegrundkörpers 1 außen haubenartig überlappen (Fig. 2).

Entsprechend der Fig. 1 sind etwa in der Mitte der Seitenwände 7 der Abdeckhaube 2 und nahe deren durch die obere Wand 8 und die Aussparung 9 gebildeten Oberseite Lagerzapfen 11 angeordnet, die relativ kurz ausgebildet sind und nach innen vorstehen. Die Lagerzapfen 11 greifen in Lagerschlitze 12 ein, die im vorderen Bereich der Seitenwände 3 des Gehäusegrundkörpers 1 nahe dessen oberen Wand 5 ausgebildet sind. Die Lagerschlitze 12 sind unter etwa 45° zur oberen Wand 5 des Gehäusegrundkörpers 1 geneigt ausgebildet und zur Vorderseite 38 des Gehäusegrundkörpers 1 gerichtet.

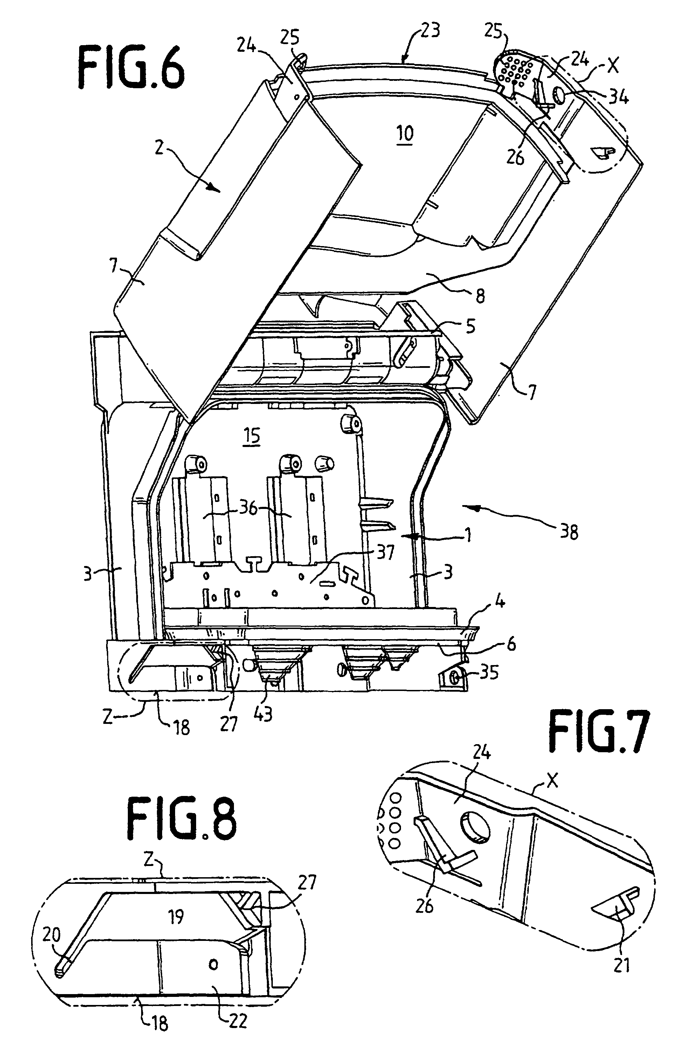

Durch diese Ausbildung kann die die Seitenwände 3 des Gehäusegrundkörpers 1 teilweise haubenartig umschließende Abdeckhaube 2 aus ihrer Schließstellung gemäß Fig. 1 zunächst um einen geringen Betrag d gemäß Fig. 3, von z.B. 10 bis 20 mm, angehoben werden, wobei die Abdeckhaube 2 aufgrund der in den Lagerschlitzen 12 geführten Lagerzapfen 11 eine Schrägbewegung zur Oberseite 17 und zur Vorderseite 38 (Fig. 6) ausführt, welche die Hinterkanten 13 der Seitenwände 7 der Abdeckhaube 2 in einen Abstand a zu einer Gebäudewand 14 bringt, wie es in Fig. 3 dargestellt ist. Die Lagerzapfen 11 befinden sich dann im oberen Bereich der Lagerschlitze 12.

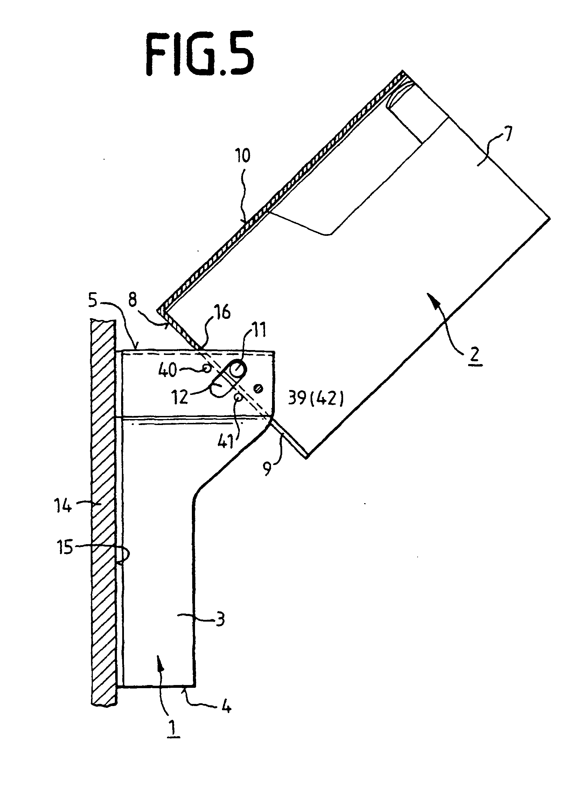

Auf den Innenseiten der Seitenwände 7 der Abdeckhaube 2 sind je eine Rastnase 39 und auf den Außenseiten der Seitenwände 3 des Gehäusegrundkörpers 1 je drei Rastnuten 40, 41, 42 (Fig. 1) derart verteilt angeordnet, daß die Abdeckhaube 2 in der angehobenen Stellung (Fig.3) und in der 90°- und 135° Stellung (Fig. 4 bzw. 5) arretiert werden kann. Die Abdeckhaube 2 kann nunmehr um ihre Lagerzapfen 11 herum aufgeschwenkt werden, bis sie in die 90°-Stellung gemäß Fig. 4 kommt. In dieser Stellung dienen die Rastnasen 39 und die Rastaufnahmen 41 zur Arretierung der Abdeckhaube 2. Das Verschwenken der Abdeckhaube 2 ist deshalb möglich, weil die obere Wand 8 der Abdeckhaube 2 mit einem U-förmigen Ausschnitt 9 versehen ist, dessen Innenkante 16 von der oberen Wand 5 des Gehäusegrundkörpers 1 frei kommt. Das weitere Verschwenken der Abdeckhaube 2 in ihre 135°-Stellung (Fig. 5) wird dann durch das Anstoßen der Innenkante 16 der U-förmigen Aussparung 9 der Abdeckhaube 2 an die obere Wand 5 des Gehäusegrundkörpers 1 beendet, wie es in Fig. 5 dargestellt ist. In dieser Stellung dienen die Rastnasen 39 und die Rastaufnahmen 42 zur Arretierung der 135°-Offenstellung der Abdeckhaube 2.

In entsprechender Weise erfolgt ein Schließen der Abdeckhaube 2 nach dem Zurückschwenken in die Position gemäß Fig. 3 und dem anschließenden schrägen Verschieben der Abdeckhaube 2 gegenüber dem Gehäusegrundkörper 1 bis in die Position gemäß Fig.1.

Die Fig. 6 zeigt in einer perspektivischen Darstellung die Ausführungsform des Gehäuses mit dem einstückig aus den Seitenwänden 3, der unteren Wand 4, der oberen Wand 5 und der Rückwand 15 aus Kunststoff gebildeten Gehäusegrundkörper 1 und der einstückig aus den Seitenwänden 7, der oberen Wand 8 und der Vorderwand 10 aus Kunststoff gebildeten Abdeckhaube 2.

Eine separat aus einem speziellen Kunststoff ausgebildete Grundplatte 6 ist in die untere Wand 4 des Gehäusegrundkörpers 1 eingeschoben und dient zur Durchführung von Kabeln mittels Kabeldurchführungen 43. Auf der Innenseite der Rückwand 15 des Gehäusegrundkörpers 1 befinden sich nicht näher beschriebene Profilschienen 36 zur Montage nicht näher dargestellter Anschlußelemente der Telekommunikation und eine Erdungsplatte 37.

Entsprechend der Darstellung in der Fig. 8 (Ausschnittsvergrößerung des Detaills Z aus der Fig. 6) sind nahe der unteren Wand 4 an den Seitenwänden 3 des Gehäusegrundkörpers 1 in zur Vorderseite 38 hin auskragenden Seitenwandteilen 18 senkrecht zur Rückwand 15 gerichtete äußere Führungskanäle 19 und von diesen unter etwa 45° abgewinkelte äußere Rastschlitze 20 ausgebildet, die zu den Lagerschlitzen 12 (Fig. 1) des Gehäusegrundkörpers 1 für die Lagerzapfen 11 der Abdeckhaube 2 parallel gerichtet sind. Am unteren Ende der Innenseiten der Seitenwände 7 der Abdeckhaube 2 sind entsprechend der Ausschnittsvergrößerung des Detaills X aus der Fig. 6 in der Fig. 7 Raststege 21 zum Eingreifen in die Führungskanäle 19 und zum Einrasten in die Rastschlitze 20 bei geschlossenem Gehäuse ausgebildet. Die Raststege 21 sind im Querschnitt L-förmig ausgebildet, wie es die Detaildarstellung gemäß Fig. 7 zeigt. Die L-förmigen Raststege 21 hintergreifen den Wandteil 22 (Fig. 8), der die untere Begrenzung des Führungskanales 19 und des anschließenden Rastschlitzes 20 bildet. Durch das Eingreifen der L-förmigen Raststege 21 in die Rastschlitze 20 nach dem Absenken der Abdeckhaube 2 sind die Seitenwände 7 der Abdeckhaube 2 gegen ein seitliches Öffnen des Gehäuses gesichert.

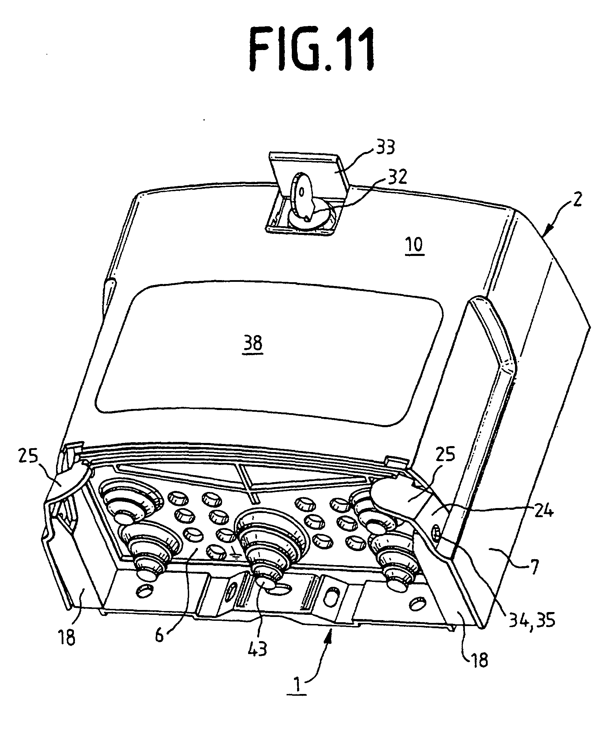

Entsprechend der Darstellung in der Fig. 6 ist die Vorderwand 10 der Abdeckhaube 2 am unteren Ende mit einem U-förmigen Freischnitt 23 versehen. Die Seitenwände 7 der Abdeckhaube 2 weisen in diesem Bereich federnde Laschen 24 mit davon nach innen abgewinkelten Betätigungsgriffen 25 auf. Auf den Innenseiten der Laschen 24 sind winkelförmige Rastnasen 26 angeordnet (Fig. 6,7), die beim Schließen der Abdeckhaube 2 in zugeordnete Rastaufnahmen 27 (Fig. 6,8) der frei auskragenden Seitenwandteile 18 der Seitenwände 3 des Gehäusegrundkörpers 1 eingreifen bzw. einrasten. Dieses Einrasten kann bei geschlossener Abdeckhaube 2 (Fig. 11) erst nach Betätigung der federnden Betätigungsgriffe 25 in Aufwärtsrichtung aufgehoben werden.

In einer der federnden Laschen 24 der Abdeckhaube 2 und in der zugeordneten Seitenwand 3 bzw. dem Seitenwandteil 18 des Gehäusegrundkörpers 1 sind in der Schließstellung sich überdeckende Öffnungen 34,35 zum Durchstecken eines nicht dargestellten Bügelschlosses vorgesehen. (Fig. 6, 7, 11).

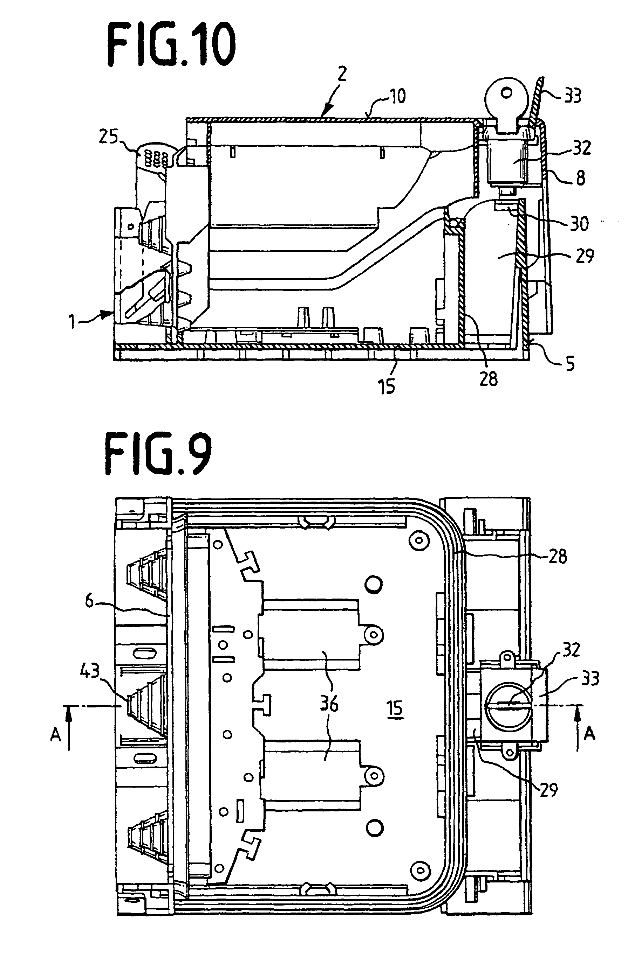

Der oberen Wand 5 des Gehäusegrundkörpers 1 ist eine im Abstand und parallel zu dieser angeordnete innere Gehäuseoberwand 28 zugeordnet, wobei zwischen der oberen Wand 5 und der inneren Gehäuseoberwand 28 eine Aufnahmekammer 29 mit einer Raste 30 für das Schließblech 31 eines in die Abdeckhaube 2 eingesetzten und mittels einer Klappe 33 abdeckbaren Schlosses 32 vorgesehen sind. (Fig. 9, 10, 11).

### BEZUGSZEICHENLISTE

- 1: Gehäusegrundkörper
- 2: Abdeckhaube
- 3: Seitenwand
- 4: untere Wand
- 5: obere Wand von 1
- 6: Grundplatte
- 7: Seitenwand
- 8: obere Wand von 2
- 9: Ausnehmung
- 10: Vorderwand
- 11: Lagerzapfen
- 12: Lagerschlitz
- 13: Hinterkante
- 14: Gebäudewand
- 15: Rückwand
- 16: Innenkante
- 17: Gehäuseoberseite
- 18: Seitenwandteil
- 19: Führungskanal
- 20: Rastschlitz
- 21: Raststeg
- 22: Wandteil
- 23: Freischnitt
- 24: Lasche
- 25: Betätigungsgriff
- 26: Rastnase
- 27: Rastaufnahme
- 28: Gehäuseoberwand
- 29: Aufnahmekammer
- 30: Raste
- 31: Schließblech
- 32: Schloß
- 33: Klappe
- 34: Öffnung
- 35: Öffnung
- 36: Profilschiene
- 37: Erdungsplatte
- 38: Vorderseite
- 39: Rastnase
- 40: Rastaufnahme
- 41: Rastaufnahme
- 42: Rastaufnahme
- 43: Kabeldurchführungen

- a: Abstand
- b: Breite
- B: Breite
- d: Betrag

## Patentansprüche

1. Gehäuse aus einem Grundkörper (1) mit nahe dessen oberer Wand (5) im verderen Bereich der Seitenwände (3) angeordneten Lagerschlitzen (12) und aus einer Abdeckhaube (2) mit etwa in der Mitte der Breite der Seitenwände nahe deren oberer Wand (8) angeordneten Lagerzapfen (11), die in den Lagerschlitzen (12) des Grundkörpers (1) schwenkbar geführt sind, insbesondere für Anschlußfelder der Telekommunikations- und Datentechnik,
**dadurch gekennzeichnet,**
**daß** die mit einer U-Förmigen Ausnehmung (9) versehene obere Wand (8) der Abdeckhaube (2) und die angrenzende obere Wand (5) des Gehäusegrundkörpers (1) in der Schließstellung die Gehäuseoberseite (17) bilden.

2. Gehäuse nach Anspruch 1, **dadurch gekennzeichnet, daß** die Lagerzapfen (11) etwa in der Mitte der Breite der Seitenwände (7) der Abdeckhaube (2) und die Lagerschlitze (12) im vorderen Bereich der Seitenwände (3) des Gehäusegrundkörpers (1) angeordnet sind.

3. Gehäuse nach Anspruch 1, **dadurch gekennzeichnet, daß** die Seitenwände (3) und die untere Wand (4) des Gehäusegrundkörpers (1) schmaler als die obere Wand (5) ausgebildet sind und die Seitenwände (7) der Abdeckhaube (2) die Seitenwände (3) des Gehäusegrundkörpers (1) in der Schließstellung überdecken, wobei in die untere Wand (4) des Gehäusegrundkörpers (1) eine Grundplatte (6) eingesetzt ist.

4. Gehäuse nach einem der Ansprüche 1 bis 2, **dadurch gekennzeichnet, daß** an den Seitenwänden (3) nahe der unteren Wand (4) des Gehäusegrundkörpers (1) senkrecht zur Rückwand (15) gerichtete äußere Führungskanäle (19) und zu den Lagerschlitzen (12) parallele äußere Rastschlitze (20) und auf den Innenseiten der Seitenwände (7) der Abdeckhaube (2) Raststege (21) zum Eingreifen in die Führungskanäle (19) und zum Einrasten in die Rastschlitze (20) ausgebildet sind.

5. Gehäuse nach einem der Ansprüche 1 bis 3, **dadurch gekennzeichnet, daß** die Vorderwand (10) der Abdeckhaube (2) am unteren Ende mit einem U-förmigen Freischnitt (23) versehen ist und die Seitenwände (7) der Abdeckhaube (2) federnde Laschen (24) aufweisen, deren Innenseiten mit Rastnasen (26) versehen sind, die beim Schließen der Abdeckhaube (2) in zugeordnete Rastaufnahmen (27) der Seitenwände (3) des Gehäusegrundkörpers (1) einrasten.

6. Gehäuse nach einem der Ansprüche 1 bis 4, **dadurch gekennzeichnet, daß** der oberen Wand (5) des Gehäusegrundkörpers (1) eine im Abstand und parallel zu dieser angeordnete innere Gehäuseoberwand (28) zugeordnet ist, wobei zwischen der oberen Wand (5) und der inneren Gehäuseoberwand (28) eine Aufnahmekammer (29) mit einer Raste (30) für das Schließblech (31) eines in die Abdeckhaube (2) eingesetzten Schlosses (32) vorgesehen sind.

7. Gehäuse nach einem der Ansprüche 1 bis 5, **dadurch gekennzeichnet, daß** in einer der federnden Laschen (24) der Abdeckhaube (2) und in der zugeordneten Seitenwand (3) des Gehäusegrundkörpers (1) in der Schließstellung sich überdeckende Öffnungen (34,35) zum Durchstecken eines Bügelschlosses vorgesehen sind.

## Claims

1. Casing comprising a basic body (1) with bearing slots (12) arranged close to the upper wall (5) of the latter in the front region of the side walls (8) and comprising a cover shroud (2) with bearing pins (11) arranged approximately in the centre of the width of the side walls close to the upper wall (8) of the said shroud, which bearing pins are guided in the bearing slots (12) of the basic body (1) in such a way that they can swivel, in particular for terminal fields in telecommunication and data engineering, **characterized in that** the upper wall (8) of the cover shroud (2) provided with a U-shaped recess (9) and the adjoining upper wall (5) of the basic casing body (1) form the upper side (17) of the casing in the closed position.

2. Casing according to Claim 1, **characterized in that** the bearing pins (11) are arranged approximately in the centre of the width of the side walls (7) of the cover shroud (2) and the bearing slots (12) are arranged in the front region of the side walls (3) of the basic casing body (1).

3. Casing according to Claim 1, **characterized in that** the side walls (3) and the lower wall (4) of the basic casing body (1) are made narrower than the upper wall (5) and, in the closed position, the side walls (7) of the cover shroud (2) cover the side walls (3) of the basic casing body (1), a base plate (6) being fitted into the lower wall (4) of the basic casing body (1).

4. Casing according to one of Claims 1 to 2, **characterized in that** on the side walls (3), close to the lower wall (4), of the basic casing body (1) there are formed outer guide channels (19), which are directed perpendicularly with respect to the rear wall (15), and outer catch slots (20), which are parallel to the bearing slots (12), and on the inner sides of the side walls (7) of the cover shroud (2) there are formed catch hooks (21) for engaging in the guide channels (19) and for catching in the catch slots (20).

5. Casing according to one of Claims 1 to 3, **characterized in that** the front wall (10) of the cover shroud (2) is provided at the lower end with a U-shaped relief (23) and the side walls (7) of the cover shroud (2) have resilient tabs (24), the inner sides of which are provided with catch lugs (26), which catch in assigned catch receptacles (27) of the side walls (3) of the basic casing body (1) during closing of the cover shroud (2).

6. Casing according to one of Claims 1 to 4, **characterized in that** the upper wall (5) of the basic casing body (1) is assigned an inner upper casing wall (28), arranged at a distance from and parallel to the latter, there being provided between the upper wall (5) and the inner upper casing wall (28) a receiving chamber (29) with a catch (30) for the closing plate (31) of a lock (32) fitted into the cover shroud (2).

7. Casing according to one of Claims 1 to 5, **characterized in that** in one of the resilient tabs (24) of the cover shroud (2) and in the assigned side wall (3) of the basic casing body (1) there are provided openings (34, 35) overlapping in the closed position, for inserting through a padlock.

## Revendications

1. Boîtier constitué d'un corps de base (1) qui présente à proximité de sa paroi supérieure (5) des fentes de montage (12) agencées dans la région avant des parois latérales (3) et d'un capot de recouvrement (2) qui, sensiblement au milieu de la largeur des parois latérales et à proximité de sa paroi supérieure (8), présente des tourillons de montage (11) guidés à pivotement dans les fentes de montage (12) du corps de base (1), ce boîtier étant en particulier destiné à des panneaux de connexion de la technologie des télécommunications ou de l'informatique, **caractérisé en ce que** la paroi supérieure (8) du capot de recouvrement (2), dotée d'un évidement (9) en forme de U, et la paroi supérieure contiguë (5) du corps de base (1) du boîtier forment le côté supérieur (17) du boîtier en position fermée.

2. Boîtier selon la revendication 1, **caractérisé en ce que** les tourillons de montage (11) sont agencés sensiblement au milieu de la largeur des parois latérales (7) du capot de recouvrement (2) et les fentes de montage (12) sont agencées dans la région avant des parois latérales (3) du corps de base (1) du boîtier.

3. Boîtier selon la revendication 1, **caractérisé en ce que** les parois latérales (3) et la paroi inférieure (4) du corps de base (1) du boîtier sont plus étroites que la paroi supérieure (5) et **en ce que** les parois latérales (7) du capot de recouvrement (2) recouvrent les parois latérales (3) du corps de base (1) du boîtier en position fermée, une plaque de base (6) étant insérée dans la paroi inférieure (4) du corps de base (1) du boîtier.

4. Boîtier selon l'une des revendications 1 à 2, **caractérisé en ce que** des canaux extérieurs de guidage (19) perpendiculaires à la paroi arrière (15) et des fentes extérieures d'encliquetage (20) parallèles aux fentes de montage (12) sont configurés sur les parois latérales (3) du corps de base (1) du boîtier à proximité de la paroi inférieure (4) de celui-ci et **en ce que** des nervures d'encliquetage (21) qui s'engagent dans les canaux de guidage (19) et s'encliquettent dans les fentes de montage (20) sont agencées sur le côté intérieur des parois latérales (7) du capot de recouvrement (2).

5. Boîtier selon l'une des revendications 1 à 3, **caractérisé en ce que** la paroi avant (10) du capot de recouvrement (2) est dotée sur son extrémité inférieure d'une découpe (23) en forme de U et **en ce que** les parois latérales (7) du capot de recouvrement (2) présentent des pattes élastiques (24) dont les côtés intérieurs sont dotés de becs d'encliquetage (26) qui, lors de la fermeture du capot de recouvrement (2), s'encliquettent dans des logements d'encliquetage (27) associés ménagés dans les parois latérales (3) du corps de base (1) du boîtier.

6. Boîtier selon l'une des revendications 1 à 4, **caractérisé en ce qu'**à la paroi supérieure (5) du corps de base (1) du boîtier est associée une paroi supérieure intérieure (28) de boîtier agencée à distance parallèlement à celle-ci, une chambre de réception (29) dotée d'un bec (30) destiné à la cloison (31) d'une serrure (32) agencée dans le capot de recouvrement (2) étant prévue entre la paroi supérieure intérieure (28) de boîtier et la paroi supérieure (5) du boîtier.

7. Boîtier selon l'une des revendications 1 à 5, **caractérisé en ce que** des ouvertures (34, 35) qui se recouvrent dans la position de fermeture et qui sont destinées au passage d'un cadenas sont prévues dans une des pattes élastiques (24) du capot de recouvrement (2) et dans la paroi latérale (3) associée du corps de base (1) du boîtier.
